# EUROPEAN PATENT APPLICATION

(11) **EP 2 597 587 A2**
(43) Date of publication of application: **29.05.2013**
(21) Application number: 12193800.5
(22) Date of filing: 22.11.2012
(51) Int. Cl.: G06F 21/10

(54) **Method and apparatus for managing time-limited contents in an electronic device**

(30) Priority: 22.11.2011 KR 20110122254
(71) Applicant: Samsung Electronics Co., Ltd, Gyeonggi-do 443-742 (KR)
(72) Inventor: Lee, Boran, 443-742 Gyeonggi-do (KR); Jang, Sihak, 443-742 Gyeonggi-do (KR)
(74) Representative: de Baat, Michiel Anton

(57) **Abstract**

A time-limited content management method and device for presenting the types and expiry dates of time-limited contents at a side of the content view screen and an execution screen is provided in order for the user to manage the time-limited contents efficiently as intended. The time-limited content management method of an electronic device according to the present invention includes requesting for displaying at least one time-limited content; and displaying a view screen having the at least one content arranged in response to the request, wherein the view screen comprises type and expiry period information of the at least one time-limited content. The time-limited content management method and device is capable of displaying the type and expiry period of the executed time-limited content at a side of the content execution screen so as to facilitate management of the time-limited contents.

## Description

The present invention relates to a time-limited contents management method and apparatus of an electronic device and, in particular, to a time-limited content management method and apparatus of an electronic device for presenting the types and expiry dates of the time-limited contents at a side of the content view screen and execution screen to allow the user to manage time-limited contents efficiently as intended.

With the rapid advance of the information communication and semiconductor technologies, popularity and use of electronic devices are increasing at a fast rate. Recent electronic devices are configured to support diverse functions. For example, a certain electronic device integrates multiple functions including TV function (e.g. mobile broadcast such as Digital Multimedia Broadcasting (DMB) and Digital Video Broadcasting (DVB)), music playback function (e.g. MPEG Audio Layer-3 (MP3)), camera function, data communication function, Internet access function, short range radio communication function, etc. Particularly, the reinforced multimedia function of the electronic device allows for storing and playing back of various contents including electronic books, audio files, movie files, etc.

In pace with this tendency, much interest is being placed in digital content rental service for granting the use of the content for a limited time period and subscription service that grants access to issued contents for a predetermined time period. However, an electronic device lacks the means of providing information about the expiry date and/or time of the rented content or the subscribed content. This means that the user has to load a detailed information screen that displays information about the rented or subscribed content to check the expiry date and/or time of the content. From the user's view point, it is inconvenient to have to retrieve the information on the expiry dates and/or times of all content items in mind or check the expiry date and/or time of a certain item whenever that item has to be used. The problem becomes worse as the number of rented and/or subscribed content items increases.

The conventional electronic device is also lacking in the ability to sort the rented and/or subscribed content items into expired and non-expired contents, i.e. non-playable and playable contents, and then present information regarding the sorting result. That is, the conventional electronic device provides the user with insufficient information for discriminating between the expired and non-expired contents. There is therefore a need for a method for solving the user inconvenience caused by the lack of content management function of the conventional electronic device.

The present invention has been made in an effort to solve the above stated problem and it is an object of one aspect of the present invention to provide a time-limited contents management method and apparatus of an electronic device which is capable of managing the time-limited contents intuitively and conveniently by providing the user with the expiry information of at least one time-limited content stored in the electronic device at a side of a view (list view or thumbnail view) screen and execution screen.

It is another object of another aspect of the present invention to provide a time-limited contents management method and device which is capable of facilitating management of the contents by simplifying the operation of deleting the expired content or renewing the rental or subscription of the content.

It is another object of another aspect of the present invention to provide a time-limited contents management method that is capable of warning, through an alarm, the approach of the expiry of the time limited content in advance (e.g. two days before expiry).

It is still another object of another aspect of the present invention to provide a time-limited contents management method that is capable of presenting the time-limited contents, for which the right of usage has expired, in a non-executable state.

In accordance with an aspect of the present invention, a time-limited content management method comprises requesting for displaying at least one time-limited content; and displaying a view screen having the at least one content arranged in response to the request, wherein the view screen comprises type and expiry period of the at least one time-limited content.

In accordance with another aspect of the present invention, a content management device includes a control unit which controls the displaying of a view screen having the at least one content arranged in response to a request for displaying at least one time-limited content; and a display panel which displays the view screen, wherein the view screen comprises type and expiry period of the at least one time-limited content.

In accordance with another aspect of the present invention a control unit for a display panel is provided arranged to configure a view screen for displaying. Further a computer program comprising executable code and a information carrier comprising the computer program is provided for controlling the control unit in accordance with any of the embodiments of the invention.
FIG. 1 is a block diagram illustrating a configuration of a portable terminal according to an embodiment of the present invention;
FIG. 2 is a flowchart illustrating a time-limited content management method according to an embodiment of the present invention;
FIGS. 3 to 5 are drawings illustrating exemplary screens displayed by the portable terminal while performing the rental content management method according to an embodiment of the present invention;
FIGS. 6 to 9 are drawings illustrating exemplary screens displayed by the portable terminal while performing the subscription content management method according to an embodiment of the present invention;
FIG. 10 is a drawing illustrating an exemplary execution screen of a time-limited content according to an embodiment of the present invention;
FIGS. 11 and 12 are drawings illustrating exemplary view screens of the time-limited contents according to another embodiment of the present invention; and
FIG. 13 is a flowchart illustrating an expiry alert procedure of the time-limited content management method according to an embodiment of the present invention.

Exemplary embodiments of the present invention are described with reference to the accompanying drawings in detail. The same reference numbers are used throughout the drawings to refer to the same or like parts. For the purposes of clarity and simplicity, detailed description of well-known functions and structures incorporated herein may be omitted to avoid obscuring the subject matter of the present invention.

The following descriptions of the embodiments are provided to help understand the features and structures of the present invention but not intended to limit the technical scope of the present invention. It is to be understood that changes and variations may be made to the disclosed embodiments by those of ordinary skill in the art without departing from the spirit or the scope of the present invention.

In the following description an electronic device according to embodiments of the present invention can be any device capable of playing or executing the time-limited contents such as Personal Digital Assistant (PDA), Smartphone, tablet PC, tabletop PC, digital Television (TV), Internet Protocol Television (IP TV), and Large Format Display (LFD). The following description is directed to a portable terminal for the sake of convenience, and ease of description.

In the following description, the term "time-limited content" denotes the content having a time duration during which usage is allowed. The time limited content can be classified as the rental content with a right of usage for a predetermined time duration or as a subscription content which is published periodically and has a right of usage issued permanently. For example, the limited content can be any of an electronic book, audio content (e.g. music file), and video content (e.g. movie file and online lecture file). For the sake of explanation and convenience, the following description is directed to the case of an electronic book for convenience purpose.

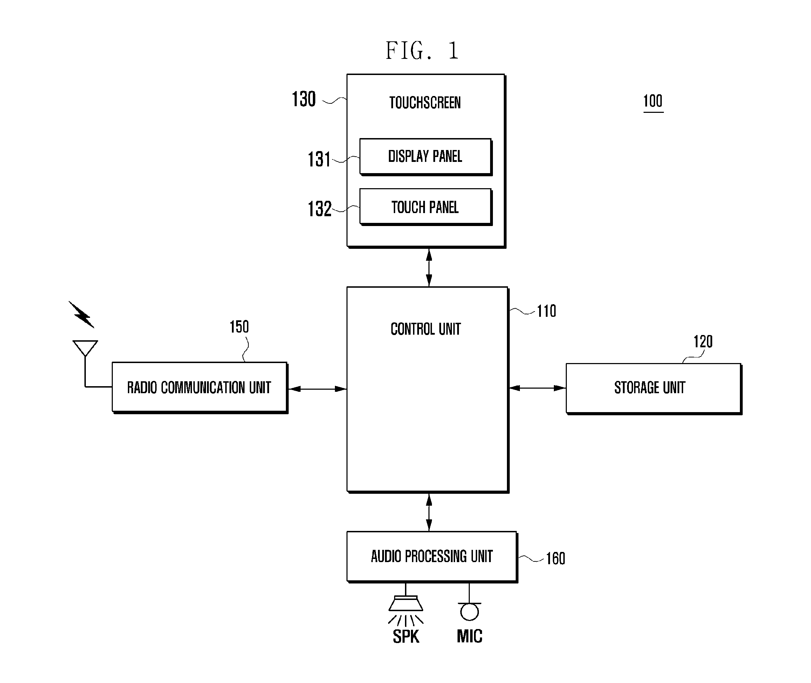

FIG. 1 is a block diagram illustrating a configuration of a portable terminal according to an embodiment of the present invention.

As shown in FIG. 1, the portable terminal 100 according to an embodiment of the present invention includes an audio processing unit 160, a radio communication unit 150, a touchscreen 130, a storage unit 120, and/or a control unit 110. The touch screen 130 can include a display panel 131 and a touch panel 132.

In this embodiment the audio processing unit 160 is connected to a microphone (MIC) and a speaker (SPK) so as to transfer a voice signal input from the microphone (MIC) to the control unit 110 in the form of data and outputs a voice signal input by the control unit 110 to the speaker (SPK) in the form of audible sound wave. That is, the audio processing unit 160 converts the analog voice signal input through the microphone (MIM) to a digital voice signal and converts the digital voice signal output by the control unit 110 to an analog voice signal to be outputted by the speaker (SPK).

Particularly in an embodiment of the present invention, the audio processing unit 160 is capable of playing the audio signal included in normal (i.e., not time-limited) or time-limited content. The audio processing unit 160 is capable of outputting sound effect for notifying the user of a content whose expiry (expiry-approaching time-limited content) is approaching is under the control of the control unit 110. The term 'expiry' or 'expiry period' is defined as an expiration time; that is, a specific time at which a period of time has lapsed or expired. The 'occurrence of an expiry' or an 'expiry' also refers to the time at which the existence of a time period has ended. An approaching expiry period refers to a time period whose end is near or will occur relatively soon. A value of an expiry period (without it being reset or reconfigured) decreases over time. In an embodiment the audio processing unit 160 can output a sound effect notifying the expiry of a time-limited content through the speaker (SPK), when it has expired in the middle of the execution of the corresponding content, under the control of the control unit 110. The audio processing unit 160 is also capable of outputting a sound effect notifying of the expiry of the content through the speaker (SPK) when a command for executing the expired content is inputted.

The radio communication unit 150 is responsible for radio communication of the portable terminal 100. The radio communication unit 150 can establish a communication channel with the mobile communication system supported by the portable terminal for voice data communications. The radio communication unit 150 is capable of including a Radio Frequency (RF) transmitter for up-converting and amplifying the signal to be transmitted and an RF receiver for low noise amplifying and down-converting a received signal. The radio communication unit 150 is also capable of receiving contents from an external server (not shown). Particularly in an embodiment of the present invention, the radio communication unit 150 is capable of receiving a time-limited content for which use is limited in time and number of playbacks. The time-limited content can be a Digital Rights Management (DRM) content. The radio communication unit is also capable of transmitting a signal to request the external server (time-limited content provision server) to renew the rental or subscription of the expired content. At that point,, the radio communication unit 150 is capable of transmitting a payment information for renewal of the rental or renewal of the subscription of the time-limited content to the external server and receiving a response message in reply to the rental or subscription renewal request message.

The radio communication unit 150 is capable of receiving content update information. For example, the radio communication unit 150 is capable of receiving a message notifying the update of a subscribed content. The radio communication unit 150 is capable of transmitting a signal requesting the server to download new contents yet to be downloaded from among the subscribed contents.

The touch screen 130 is responsible for receiving input and displaying information. In order to achieve this, the touch screen 130 is capable of including a display panel 131 and a touch panel 132.

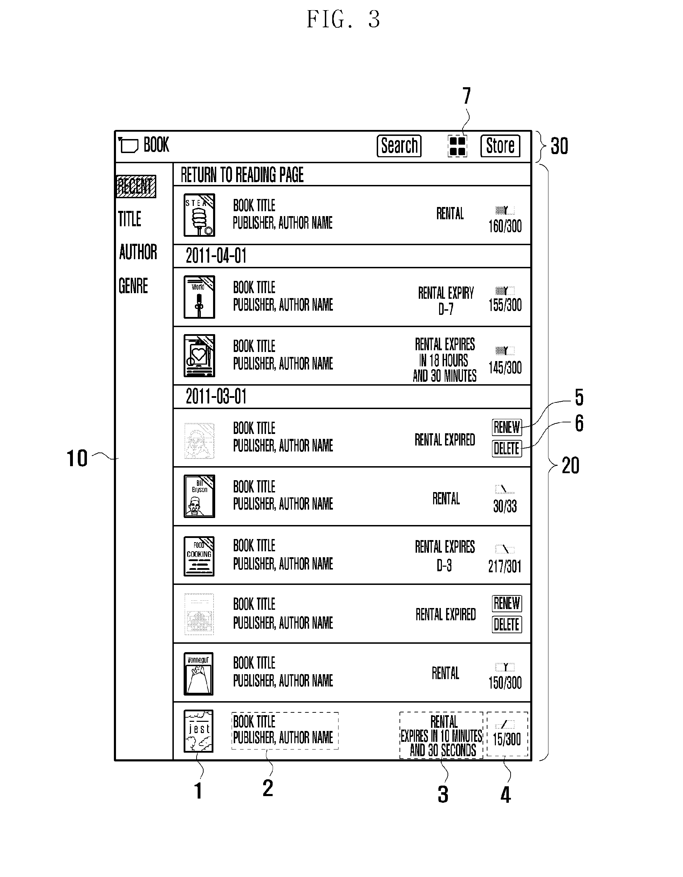

The display panel 131 displays the information inputted by or presented to the user through various menus. For example, the display unit 131 is capable of displaying various screens associated with the use of the portable terminal 100 such as a home screen, a message composition screen, and a call processing screen. The display unit 131 is also capable of displaying a view screen and content execution screen for displaying contents sorted according to a predetermined rule. The view screen can be a list view screen for displaying the contents in the form of a list or a thumbnail view screen for displaying the contents in the form of thumbnails. Particularly, the display panel according to an embodiment of the present invention is capable of displaying information on the type and expiry of the time-limited content proximate to the view screen and display an execution screen under the control of the control unit 110. The term "proximate" or "proximately" as used with respect to the location on a screen of type information, expiry information or other information associated with content(s) (e.g., time limited content) being displayed refers to the positioning of the information on any side (left, right, top or bottom side) of the displayed time related content and/or refers to the information being positioned sufficiently near the periphery (or connected to the time limited content) of the displayed time limited content so that it is clear that the information is associated with or forms part of the displayed time limited content(s).The display panel 131 is also capable of displaying a notification screen for notifying the user of the information in the time-limited content that is to be expired under the control of the control unit 110. For example, the display panel 131 is capable of displaying of an indicator in the form of an icon or a pop up window for informing of the contents to be expired. A detailed description of the display panel 131 with reference to FIGS. 3 to 12 now follows. The display panel 131 is capable of being implemented with one of a Liquid Crystal Display (LCD), an Organic Light Emitted Diode (OLED), and an Active Matrix OLED (AMOLED).

The touch panel 132 is, in an embodiment, disposed over the entire surface of the display panel 131 and is capable of generating a touch event in response to a contact of a user's finger or a stylus and may transfer the touch event to the control unit 110. In particular, the touch panel 132 detects the touch based on the change of physical characteristic (e.g. capacitive quantity or resistive quantity) and transfers the information about the location and type of the touch (e.g., touch, touch release, tap, double touch, drag, flick, sweep, multi-touch, etc.) to the control unit 110. Since the touch panel 132 is obvious to those in the art, detailed description thereon is omitted herein. Particularly in an embodiment of the present invention, the touch panel 132 is capable of transferring various control signals for management of the time-limited content to the control unit 110. The control signals can be any one of the following: a signal for requesting a display of the view screen, a signal for requesting a switch from the list view screen to the thumbnail view screen or from the thumbnail view screen to the list view screen, a signal for requesting the deletion of the expired content, a signal for requesting the renewal of the expired content, a signal for requesting the purchase of the expired content, a signal for requesting the download of the content, or a signal for requesting execution of a specific content.

The storage unit 120 is capable of storing programs necessary for the controlling function according to an embodiment of the present invention and user data. For example, the storage unit 120 is capable of storing programs including an Operating System (OS) for booting-up of the portable terminal 100 and for controlling overall operations of the portable terminal 100; and application programs associated with the optional functions such as camera function, audio playback function, still and motion picture playback function, and short range radio communication function; and various contents (e.g. normal contents having no restriction and time-limited contents). The storage unit 120 is also capable of storing the key maps and menu maps for operating the touch screen 130. Here, the key maps and menu maps can be configured in various formats. For example, the key maps can include a keyboard map, a 3x4 key map, a QWERTY key map, and an application-specific control key map. Also, the menu map can be for controlling operation of the currently running application program. Particularly in an embodiment of the present invention, the storage unit 120 is capable of storing information on the types and expiries of the time-limited contents. The types of the time-limited content may include rental content for granting temporary usage right for a predetermined period and subscription content for granting the permanent usage right for all contents issued during a predetermined period. The expiry information can be the value obtained by adding a number of rental data to the time when the content was rented. The expiry information also can be the value obtained by adding the subscription period to the time where the content was subscribed. The storage unit 120 is capable of storing a first reference value for determining whether to display the expiry in a D-day format. That is, if the expiry time is greater than the first reference value, the control unit 110 displays only the type of the time-limited content. Otherwise, the control unit displays the expiry in a D-day format. The first reference value is thus a threshold and the control unit either displays the type of the time-limited content when the expiry time for the content is greater than the first reference value or the control unit displays the time-limited content and the time remaining for expiry to occur (in D-day format) when the expiry time is equal to or less than the first reference value. For example, if the first reference value is set to 7 days and if the expiry is at 3 days,(i.e., 3 days remaining until expiration of time) the control unit 110 is capable of displaying the expiry information in the form of "D-3" at a side of the time-limited content view screen or content execution screen. The first reference value can be set to a value that may or may not have to be calculated. The use of a first reference value is just an example of one embodiment, and the present invention is not limited thereto.

The storage unit 120 is also capable of storing a second reference value for indicating or warning the approaching of the expiry of the time-limited content. For example, if the second reference value is set to 2 days, the control unit 110 is capable of notifying the user of the expiry of the time-limited content at 2 days before the expiry in the form of visual alarm (icon or popup window), audio alarm (sound effect), or tactile alarm (vibration). The second reference value can be set based on the time-limit of a particular content or it can be set to the same value for all time-limited contents. Also, there can be multiple second reference values. For example, multiple second reference values are set to 2 days, 1 day, 5 hours, etc. respectively. The use of a second reference value is but one particular embodiment of the present invention; the present invention is not at all limited to this particular embodiment.

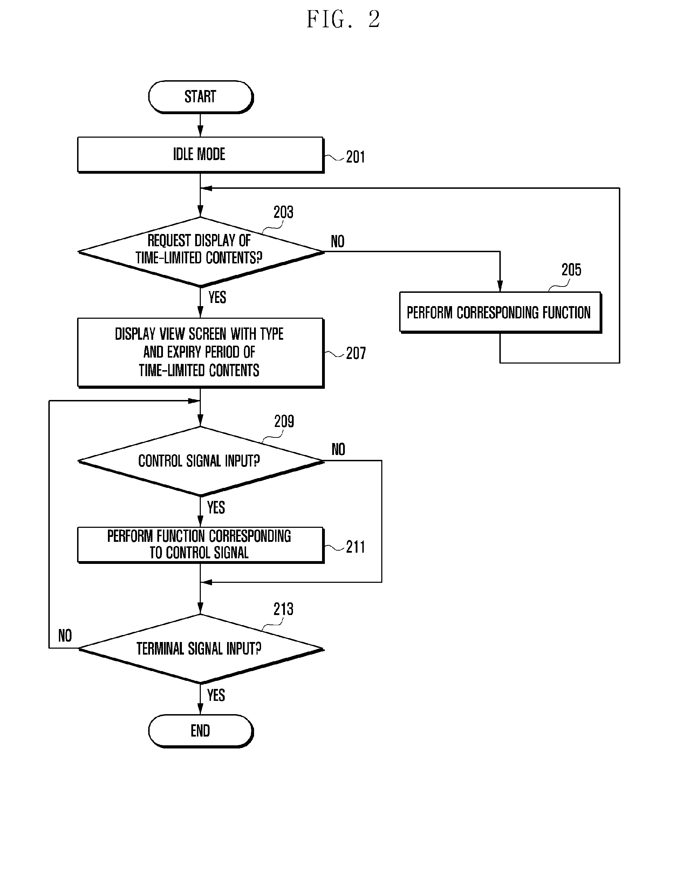

The storage unit 120 is also capable of storing the application program for controlling the management of the time-limited contents. The application program can be executed in different ways as is described with reference to FIGS. 2 to 12.

The control unit 110 can be arranged to control the overall functions and the signal flows among the internal function blocks of the mobile terminal. In any of the embodiments the control unit is arranged to configure a view screen having the at least one time-limited content arranged in response to a request for displaying at least one time-limited content. The view screen can be displayed on the display panel. The control unit 110 can control display of the view screen.

In any of the embodiments of the present invention, the control unit 110 can be arranged to control the display of a view screen to show expiry time information (type and expiry of the time-limited content) at one side of the view screen in response to a time-limited content view screen display request. The control unit 110 can be arranged to control the display to show the expiry time information at a side of the time-limited content execution screen. In order to achieve this, the control unit is capable of calculating the expiry period of the time-limited content, i.e. the residual time to expiry of the time-limited content. The control unit 110 is capable of controlling the display of the expiry period in the D-day format for circumstances where a time-limited content has a residual time to expiry of greater than 1 day. For cases where the remaining time is less than a day, the format can be "hours: minute". For cases in which the time-limited content has residual time to expiry of less than 1 hour, the remaining time can be displayed in the format of "minutes : seconds". In the case where the first reference value is used to determine whether to display the expiry period in the form of D-day, the control unit 110 is capable of controlling the display to not show the expiry period of the time-limited content having a residual time (i.e., time remaining until expiration) that is greater than the first reference value. The expiry time is controlled to be displayed in the D-day format when the residual time is equal to or less than the first reference value and equal to or greater than 1 day. For cases where the time limited content has a residual time of less than 1 day, the format for displaying the remaining time can be in the form of "hours : minutes" and can be in the form of "minutes : seconds" where the time-limited content has a residual time to expiry of less than 1 hour.

In any of the embodiments the control unit 110 can be arranged to check the validity of the right of usage for a time-limited content based on the expiry time. In case that the rental period of the time-limited content has expired, the control unit 110 is capable of controlling the display panel 131 to show the view screen of the time-limited content dimmed to indicate to the user that the time-limited content is non-executable. That is, for the case where the right of usage has expired the control unit 110 is no longer capable of executing a time-limited content based on right of usage. At this point, the control unit 110 is capable of controlling the display to show a menu item for renewal of the rental period of the content and a menu item for deleting the content at a side of the content item that is an expired right of usage time-limited content.

The control unit 110, in any of the embodiments, is capable of notifying the user the time-limited contents having usage rights that will soon expire. In an exemplary case where the second reference value is set to 2, the control unit 110 is capable of notifying the user 2 days prior to the occurrence of the expiry such time limited contents in the form of a visual alarm (icon or popup window), audio alarm (sound effect), or tactile alarm (vibration). In the case where multiple second reference values are set, the control unit 110 is capable of notifying the user of the respective expiries of the contents. If there are three second reference values set to 2 days, 1 day, and 5 hours; the control unit 110 is capable of notifying the user of the expiry of the content at 2 days, 1 day, and 5 hours before the occurrence of each expiry, respectively.

The control unit 110 is capable of managing multiple time-limited contents (i.e. a series of content) through a representative content. The representative content can be the most recent content. The control unit 110 is capable of setting the expiry period having the least residual time to expiry as the expiry period of the representative content. The control unit 110 is also capable of displaying a popup window or switching the pages to present all related contents in response to a selection (touch) signal input on the view screen. Detailed descriptions of the operations of the control unit 110 are done with reference to FIGS. 2 to 12.

Although not shown in FIG. 1, the portable terminal 100 according to any of the embodiments of the present invention, is capable of further including at least one of a camera module for taking still and motion pictures, a broadcast receiver module for receiving broadcast, a digital audio playback module such as MPEG Audio Layer-3 (MP3), and a proximity sensor module for sensing an approaching object. Although not enumerated above, the portable terminal 100 according to an embodiment of the present invention is capable of further including other components equivalent to the aforementioned components.

FIG. 2 is a flowchart illustrating a time-limited content management method according to an embodiment of the present invention.

Referring to FIGS. 1 and 2, the portable terminal 100 is in idle state at step 201. In the idle state, the control unit 110 monitors touch screen 130 to detect a user input. If a user input is detected, the method moves to step 203 to determine whether the user input is a time-limited content display request for displaying at least one of time-limited content. If the user input is not a time-limited content display request, the control unit 110 performs a function corresponding to the user input at step 205. For example, the control unit 110 is capable of executing audio playback function, digital broadcast playback function, or Internet access function, or maintain the idle state in response to the user input.

Otherwise, if the user input is the time-limited content display request, the control unit 110 is capable of displaying a view screen with the information on the type and expiry of the time-limited content at step 207. The view screen is a screen for presenting the contents sorted in a predetermined order (e.g. in order of recent use date, title, author, genre, or subscription type) in the form of a list view screen or thumbnail view screen. At this time, the control unit 110 is capable of displaying the last used view screen in response to the view screen display request. For example, if the last view screen used before the view screen request was a list view screen for content playback, the control unit 110 then displays the list view screen in response to the view screen request. Otherwise, if the last view screen before the view screen request was a thumbnail view screen then thumbnail view screen is used for content playback. The control unit 110 is also capable of displaying the view screen that has been set as a default view screen mode.

Next, in step 209, the control unit 110 determines whether a signal input is a control signal. If no control signal has been inputted, the method of the present invention goes to step 213. Otherwise, if a control signal has been inputted, the control unit 110 performs a function corresponding to the control signal at step 211. For example, if the control signal is a request signal for switching view screens, the control unit 110 is capable of switching from the list view screen to the thumbnail screen or vice versa. If the control signal is a request signal for executing a time-limited content, the control unit 110 does so. In performing the execution, if the execution-requested content is an expired content, the control unit 110 notifies the user of the expiry of the execution-requested content using at least one of a sound effect, a vibration, and a notification message. The control unit 110 is also capable of requesting an external server (not shown) for renewal or repurchase of the expired content. The control unit 110 is further capable of deleting the expired content in response to an expired content deletion request. In the case where through a touch selection, a thumbnail image of a series of contents related to each other are managed by a representative content, the control unit 110 is capable of displaying a popup window for presenting the individual contents. At this point, the popup window is capable of presenting the related contents in the form of a thumbnail list or a text list. According to another embodiment of the present invention, the control unit 110 is capable of displaying the related contents in full-screen mode rather than popup window mode. Detailed description on this is made with reference to FIGS. 3 to 12 hereinafter.

In step 213, the control unit 110 determines whether a termination signal has been inputted. If no termination signal has been inputted, the control unit 110 returns to step 209. Otherwise if a termination signal has been inputted, the time-related content management method ends and returns to the idle mode.

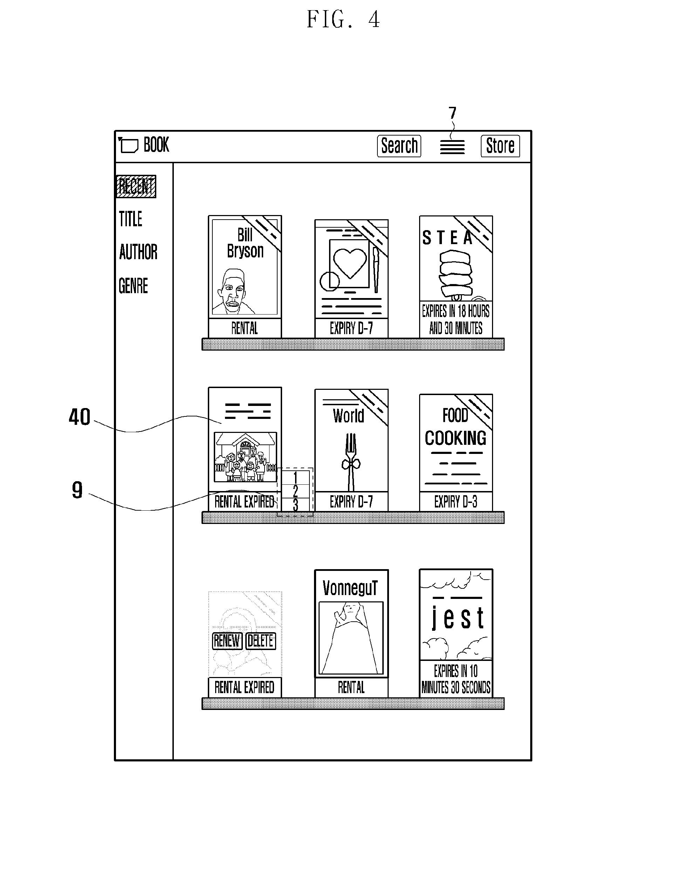

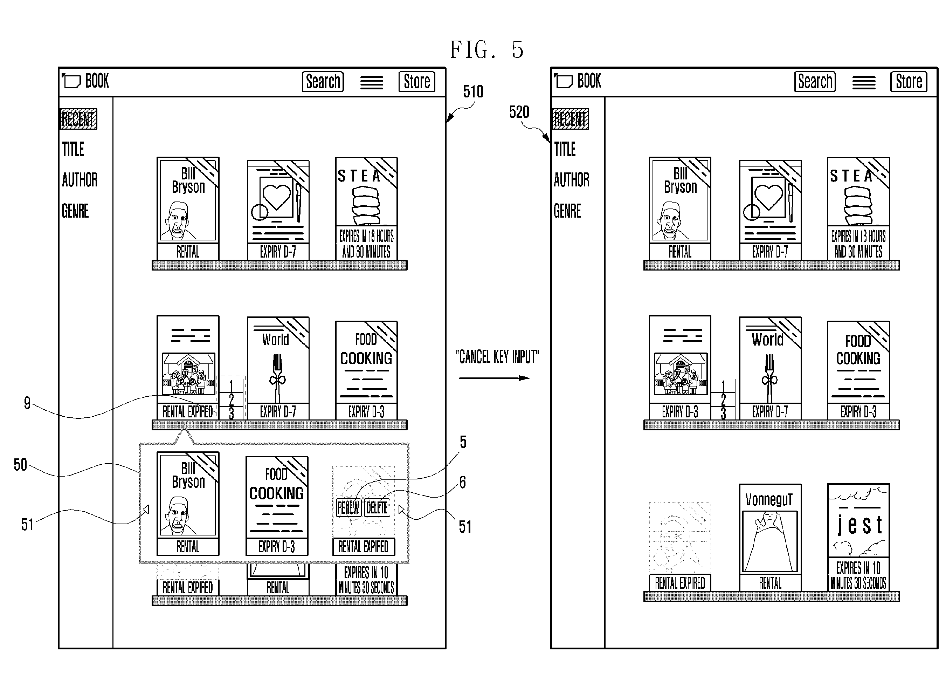

FIGS. 3 to 5 are drawings illustrating exemplary screens (list view screen in FIG. 3 and thumbnail view screen in FIGS. 4 and 5) displayed by the portable terminal in the rental content management method according to an embodiment of the present invention.

Referring to FIGS. 3 to 5, if a rental content item is requested to be displayed among the time limited contents, the control unit 110 controls such that list view screen is displayed as shown in FIG. 3. The list view screen is composed of a sorting criteria region 10 from which one of criteria for sorting out the time-limited contents can be selected, a list region for listing the time-limited contents sorted out by the criteria selected in the sorting criteria region, and a menu region 30 showing available menu items.

As shown in FIG. 3, the criteria "recent" is highlighted in the sorting criterion region 10 to indicate that the rental contents are sorted in recently used order. The list region 20 shows a plurality of content items. In the list region 20, the first item can be information on the most-recently used content. The first item presented in the list region 20 can be maintained at its position even when the sort criterion is changed. Each item corresponds to a content item. Each item may include a thumbnail image 1; summary information 2 such as book title, publisher, and author name; expiry period information 3; and page information 4 indicating recent page read by the user/total number of pages. The expiry period information 3 is capable of including the type of the content and expiry period of the content.

The control unit 110 displays no expiry period for the rental content having an expiry period greater than the predetermined first reference value; and displays the expiry in the form of "D-day" for the rental content having an expiry period is equal to or less than the first reference value but greater than 1 day, in the form of "hour : minute" for the rental content having an expiry period equal to or less than 1 day but greater than 1 hour, and in the form of "minute : second" for the rental content having an expiry period equal to or less than 1 hour. For example, in case that the first reference value is set to 7 days, if the expiry period of the rental content is 8 days, the control unit 110 displays the text "rental" indicating that the content is the rental content as the first item of the list region 20 in FIG. 3; and if the expiry period is 7 days, the control unit 110 displays the text "rental expiry D-7" as the second item of the list region 20 in FIG. 3. The control unit 110 displays a text, e.g. "expires in 18 hours 30 minutes," for the rental content of which the expiry period is equal to or less than 1 day as the third item of the list region 20 and a text, e.g., "expires in 10 minutes 30 seconds," for the rental content having an expiry period is equal to or less than 1 hour as the ninth item of the list region 20. The first reference value can be configured at the manufacturing stage and modified by the user. The first reference value can be configured as a value resettable by the user as intended by the designer of the method and device of the present intention. In such a case, the portable terminal 100 is capable of providing a menu for resetting the first reference value.

The control unit 110 is capable of controlling the display such that the content for which the rental period has expired is displayed in the form of dimmed image. The dimmed images along with a text message "rental expired" are indications to the user that the rental has expired. A renewal menu, such as item 5, for allowing for the user to renew the rental period and a deletion menu 6 for allowing the user to delete the expired content are provided. The control unit 110 is capable of transmitting a rental period renewal request message to an external server (e.g. content rental server) (not shown) when the renewal menu item 5 is selected (touched). At that point, the control unit 110 would display a popup window allowing the user to select one of the proposed periods and transmits the value corresponding to the period selected on the popup window to the external server. The control unit 110 is also capable of being configured to renew the rental period according to a value preconfigured by the user. In response, the external server sends the portable terminal 100 a billing message and, if the user approves the payment, authorizes the rental period renewal of the content. Alternatively, If the renewal menu item 5 is selected (touched), the control unit 110 is capable of connecting to a webpage (or app store) from which the content has been rented. At that point, the user is capable of extending the rental period of the rented content by approving the payment for the rental period renewal.

If the deletion menu item 6 is selected (touched), the control unit 110 is capable of deleting the corresponding content. If the view switching menu item 7 is selected (touched), the control unit 110 is capable of controlling the touchscreen 130 to display a thumbnail view screen as shown in FIG. 4. The thumbnail view screen presents the thumbnail images representing the respective contents. Each thumbnail image can be displayed along with the expiry period information below it. In FIG. 4, it is shown that the shape of the view switching menu item 7 is changed. Referring now to FIGS. 4 and 5, in case that a series of contents is represented by a thumbnail image such as the image denoted by reference number 40, the content series can be indicated by an icon 9 of accumulated books positioned at a side of the thumbnail image 40. In particular, the related contents displayed individually on the list view screen as shown in FIG. 3 are displayed by means of a thumbnail image (representative content). In order to achieve this, the control unit 110 is capable of comparing the titles and authors of the contents to sort the contents into series contents. At this point, the control unit 110 is capable of performing control operations such that the shortest expiry period among those of the related contents is displayed below the thumbnail image.

If the thumbnail image 40 is selected (touched), the control unit 110 is capable of displaying a first popup window 50 (see FIG. 5) having the related contents as shown in the exemplary screen as denoted by reference number 510 of FIG. 5. The first popup window 50 includes the thumbnail images representing the related contents and each thumbnail image is capable of including the expiry period information of the corresponding content. At this point" the thumbnail image of the expired content can be displayed along with the renew menu item 5 and the deletion menu item 6. The first popup window 50 can be provided with scroll icons 51 at its both sides to inform of the scroll function. However, the present invention is not limited thereto. For example, the icons 51 can be displayed at the top and bottom ends of the first popup window 50. In case that there is no further content to the corresponding direction, the control unit 110 is capable of displaying no icon or a disabled icon (e.g., a dimmed icon). The first popup window 50 is capable of presenting the other thumbnail images partially at its top and bottom and left and right sides to inform the user that further contents exist in these corresponding directions.

If one of the icons 51 is touched or a drag or flick event occurs in the first popup window, the control unit 110 is capable of scrolling the first popup window 50.

If a cancel key is inputted or a selection (i.e., a touch) is made outside the first popup window 50 while screen image 510 is being displayed, the control unit 110 is capable of controlling the display such that the first popup window 50 disappears as shown in the exemplary screen image 520. At this time, the control unit 110 is capable of changing the expiry period displayed along with the thumbnail image 40 for the shortest expiry period among those of the series contents that have not yet expired.

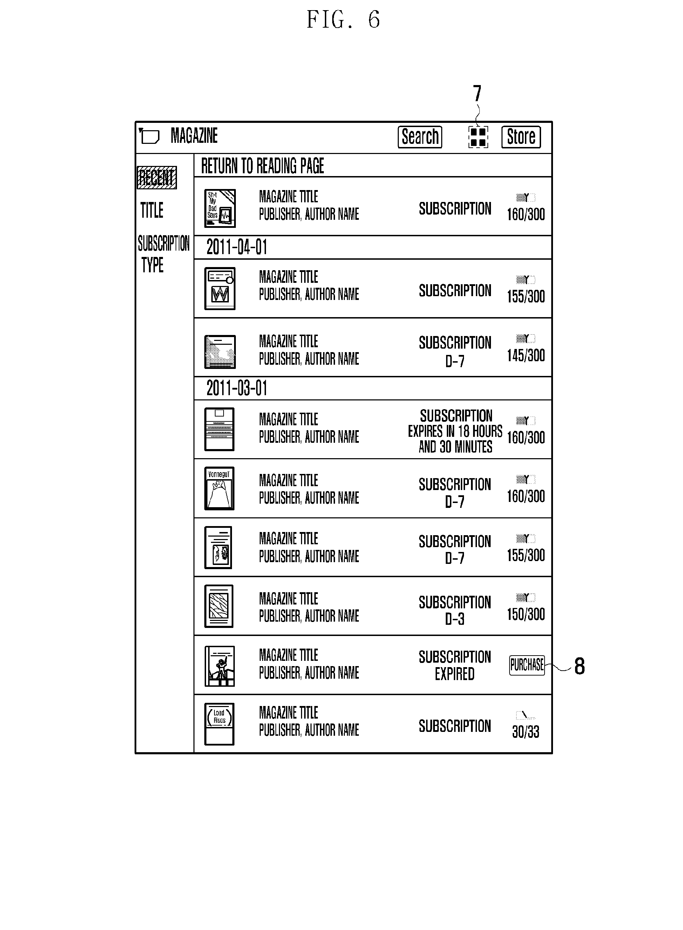

FIGS. 6 -9 are drawings illustrating exemplary screens displayed by the portable terminal in the subscription content management method according to an embodiment of the present invention.

Referring to FIGS. 1 to 9, if it is required to display the indication of the subscription contents among the time-limited contents, the control unit 110 is capable of controlling the touchscreen 130 to display the list view screen as shown in FIG. 6. The list view screen of FIG. 6 is similar to the list view screen of FIG. 3 except that the expiry period information text is expressed as "subscription" instead of "rental." That is, the list view screen shows the subscription contents sorted in the recent-use order. Also as described with reference to FIG. 6, the first item of the content list is displayed along with the information on the most-recently executed subscription content. The second and ninth content items show that the corresponding contents have expiry periods equal to or greater than the first reference value; the third, fifth and sixth content items show that the contents have an expiry period of 7 days; the fourth content item shows that the corresponding content has an expiry periods of 18 hours and 30 minutes; the seventh content item shows that the corresponding content has expiry period of 3 days; and the eighth content item shows that the subscription to the corresponding content has expired.

The control unit 110 displays a text of "subscription expired" for the subscription-expired content but not with dimming effect since the subscription content generated during the valid period has granted a permanent right of usage. The control unit 110 is also capable of displaying a purchase menu item 8 soliciting renewal of the subscription instead of the page information 4 (see FIG. 3). If the purchase menu item 8 is selected (touched), the control unit 110 is capable of transmitting to the external server (e.g. content subscription server, not shown) a message request for renewal of the subscription. At this time, the control unit 110 is capable of displaying a popup window allowing for selection of subscription period and transfers the information on the selected subscription period to the external server. The control unit 110 is also capable of controlling such that the subscription is renewed automatically with the subscription period preset by the user. At that point, the external server sends the portable terminal 100 a billing message and authorizes the renewal of the subscription period of the content upon receipt of the payment approval of the user. If the purchase menu item 8 is selected (touched), the control unit 110 is capable of establishing a connection to the webpage (or app store) from which the content has been purchased. At that point, the user can extend the subscription period by approving payment for the subscription renewal on the webpage (or app store).

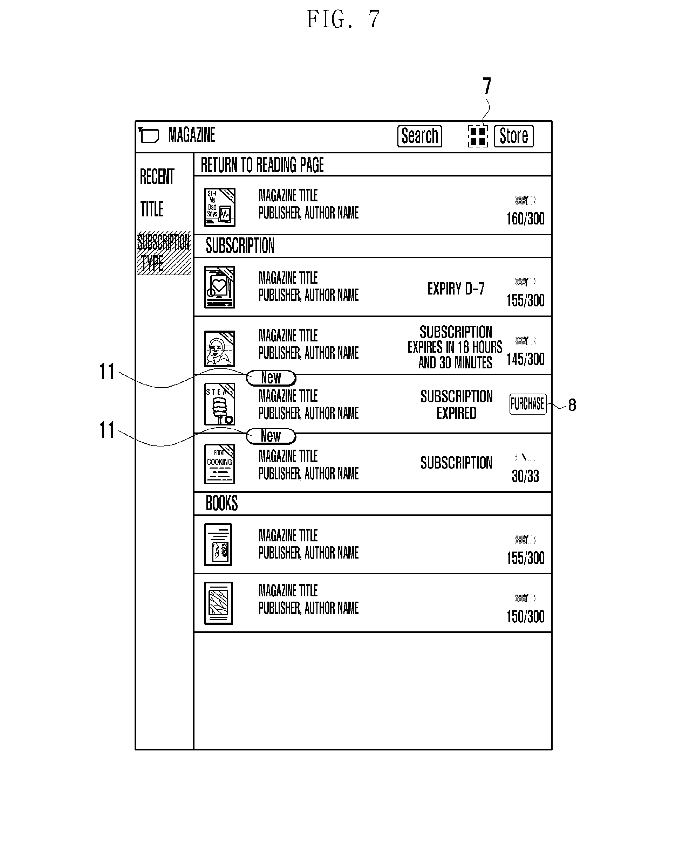

If the sorting criterion is changed to "subscription type", the control unit 110 is capable of displaying the list view screen as shown in FIG. 7. In FIG. 7, the subscription contents are displayed as sorted by subscription type. The list view screen with the contents sorted into subscription types is capable of presenting a series of related subscription contents as a representative content item. For example, the subscription contents such as the magazines published monthly can be accumulated such that the most recent issue of the magazine is displayed as the representative content. Unlike list view screen of FIG. 6 in which all of the contents are displayed, the list view screen of FIG. 7 shows the related contents by representative content.

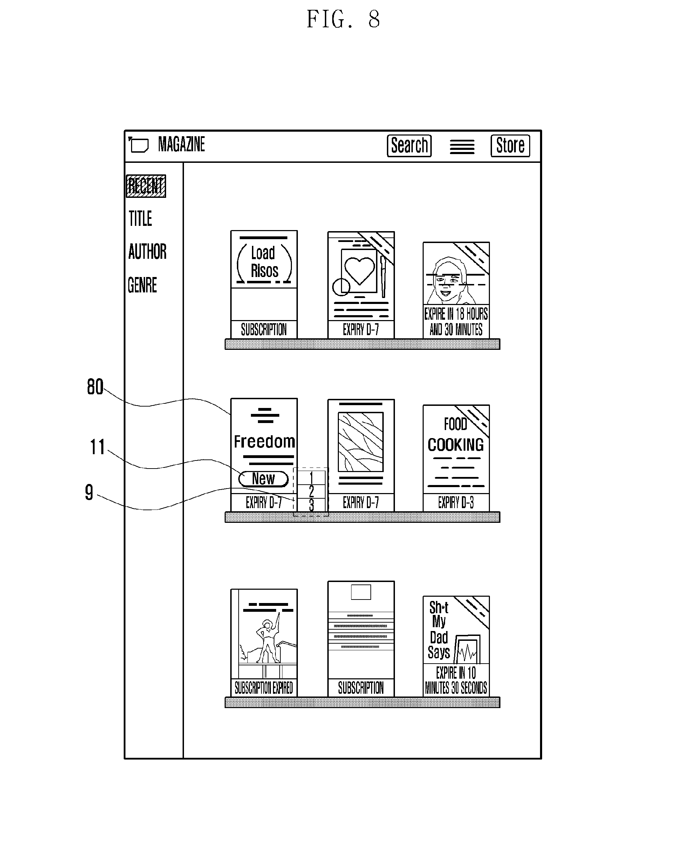

If the view switching menu item 7 is selected (touched) in the state that the list view screen of FIG. 6 or 7 is displayed, the control unit 110 is capable of controlling the touch screen 130 to display the thumbnail view screen as shown in FIG. 8. Here, each thumbnail image can be displayed along with the expiry period information displayed below the image. Meanwhile, in case that a plurality of periodic issues of content is included as denoted by reference number 80, an accumulation indication image 9 can be displayed at a side of the thumbnail image 80. In case that there is a new issue of the subscription content which has been published during the subscription period but not downloaded, a new issue indicator icon 11 alarming the existence of new content which has not been downloaded yet can be displayed at a side of the thumbnail image (or above the expiry period information). Also, the indicator icon 11 can be displayed near the magazine title as shown in the view screen of FIG. 7. Although not depicted in the drawing, the indicator icon 11 can be displayed at a side of the thumbnail image on the list view screen.

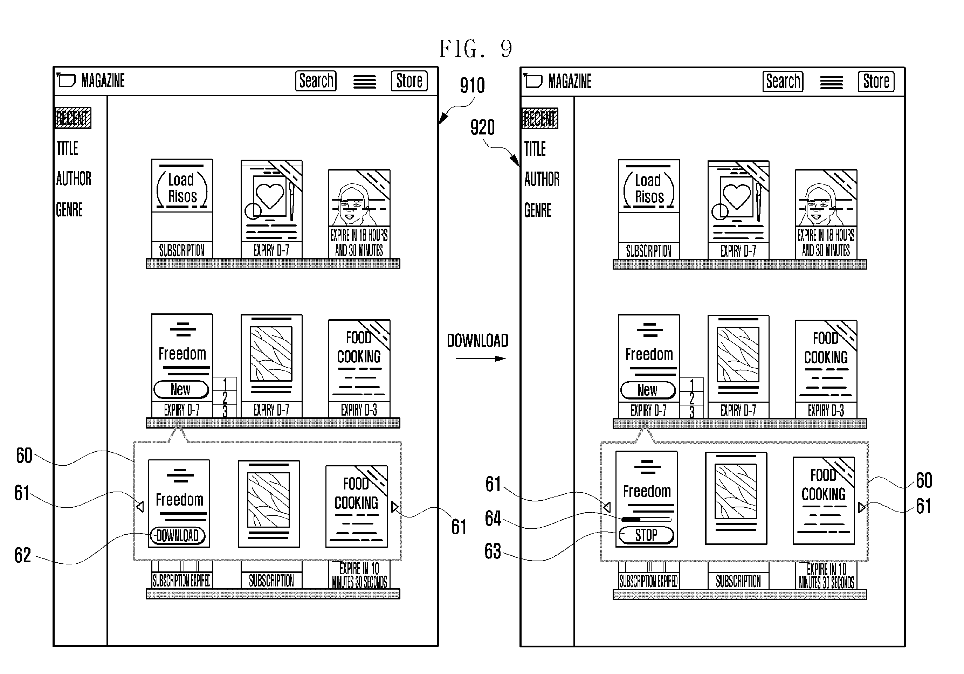

If the thumbnail image 80 is selected (touched), the control unit 110 is capable of displaying a second popup window 60, which presents the individual issues of the subscription content as denoted by reference number 910 in FIG. 9. The second popup window 60 presents the thumbnail images of the individual issues of the subscription content, and each thumbnail image can be displayed without its expiry period information. The thumbnail image corresponding to a new issue can be provided with a download menu item 62. The second popup window 60 is also capable of being provided with icons 61 at its both sides to indicate that the scroll function is enabled. However, the present invention is not limited thereto. For example, the scroll icons 61 can be displayed at the top and bottom side of the second popup window 60. In case that there is no further content to be scrolled in the corresponding direction, the scroll icon 61 can be made to disappear or can be deactivated (i.e., dimmed). The second popup window 60 is also capable of presenting the thumbnail images partially at top, bottom, left, and right sides to inform the user of the existence of further contents to be scrolled in corresponding directions.

If the download menu item 62 is selected on the exemplary screen image denoted by reference number 910, the control unit 110 is capable of downloading a new content. At this time, the control unit 110 is capable of replacing the download menu item 62 with a download stop menu icon 63 as shown in an exemplary screen image denoted by reference number 920. Indicator icon 64 shows the progression of the downloading of the new content. Afterward, if the cancel key is inputted or a selection (touch) is made outside the second popup window 60, the control unit 110 is capable of performing control operations such that the second popup window 60 disappears. Once the download of the new content has been completed, the new content indicator icon 11 (see FIG. 8) disappears.

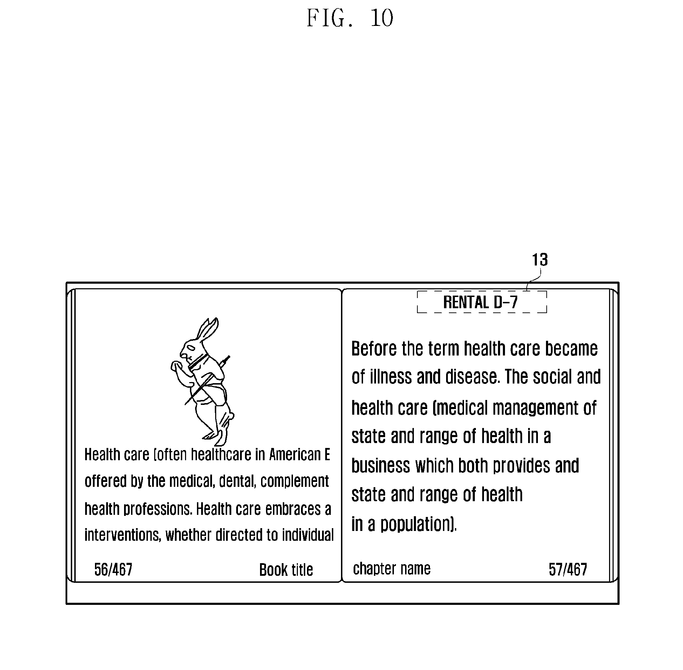

FIG. 10 is a drawing illustrating an exemplary execution screen of the time-limited content according to an embodiment of the present invention.

Referring to FIGS. 1 to 10, if a request for execution of a specific content item is input in the state where the list view or thumbnail view screen is displayed, the control unit 110 is capable of performing control operations to display the execution screen of the content. For example, if it is requested to execute an e-book, the control unit 110 is capable of controlling the display of the content execution screen as shown in FIG 10. Specifically, the control unit 110 is capable of performing control operations such that the expiry period information 13 is presented at a side of the content execution screen. It is preferred that the expiry period information 13 is displayed at a region where no text exist. In the case of audio file or video file, the control unit 110 is capable of performing control operations such that the expiry period information is displayed at a region where the playback control keys are arranged on the audio or video file playback screen. The control unit 110 is also capable of displaying the expiry period information on the video or image.

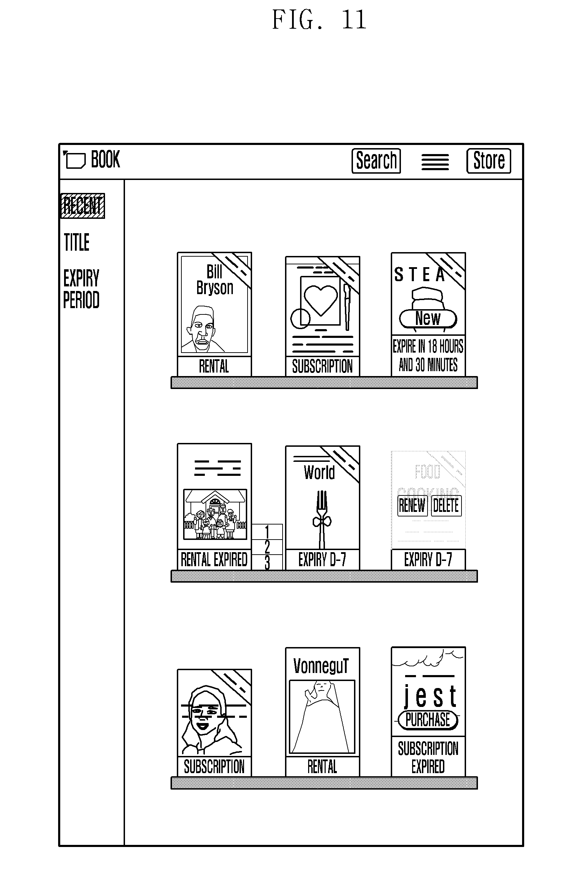

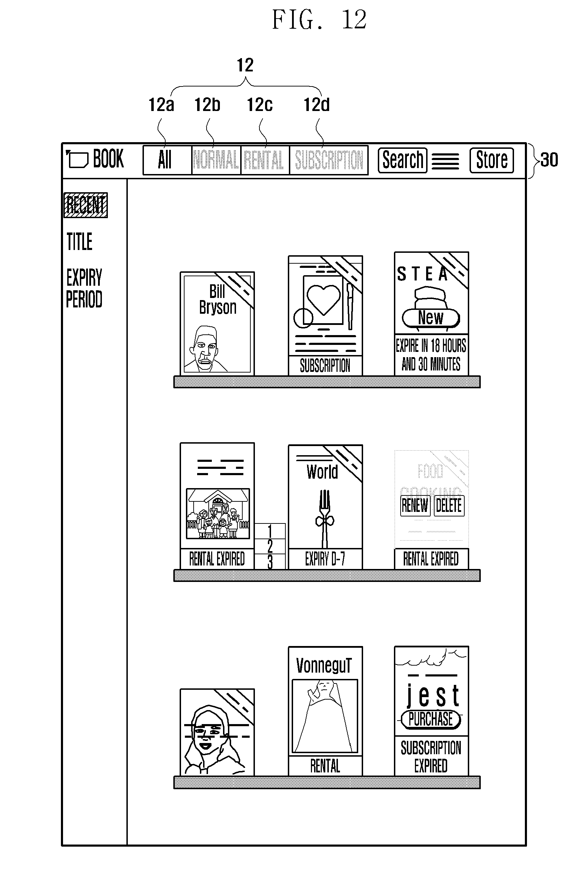

FIGS. 11 and 12 are drawings illustrating exemplary view screens of the time-limited contents according to another embodiment of the present invention.

Referring to FIGS. 1 to 12, the time-limited contents view screen according to an embodiment of the present invention is capable of being configured to display the rental contents and subscription contents on a single screen without discrimination among the types as shown in FIG. 11. Since the time-limited contents view screen of FIG. 11 is similar to those of FIGS. 3 to 9 except that the rental contents and subscription contents are displayed on a single screen, detailed description thereon is omitted herein to avoid repeated explanation.

Although FIGS. 3 to 11 are directed to the cases where only the time-limited contents are displayed on the view screen, the present invention is not limited thereto. For example, according to another embodiment of the present invention, the view screen can be configured to display both the time-limited contents and normal contents (non-time-limited; or not time limited) all together as shown in FIG. 12. In FIG. 12, the time-limited contents are presented by means of thumbnails with the expiry period information while the normal contents are presented without any other information. The content view screen is also provided with the menu region 30 including a content type selection menu 12 allowing for selection of the content type. The content type selection menu 12 is capable of including a first menu item 12a allowing for the display of all of the rental contents, subscription contents, and normal contents, a second menu item 12b allowing for the display of the normal contents only, a third menu item 12c allowing for the display of the rental contents only, and the fourth menu item 12d allowing for the display of the subscription contents only. The control unit 110 is capable of performing control operations such that all or one type of the rental, subscription, and normal contents are displayed.

Although the description has been directed to the case where the time-limited contents are the contents for which usage is limited for a predetermined period, the present invention is not limited thereto. For example, the present invention is applicable to the contents for which usage rights are granted in the form of the number of usage times. In this case, the number of remaining usage times of the content can be displayed at a side of the content view screen or the content execution screen.

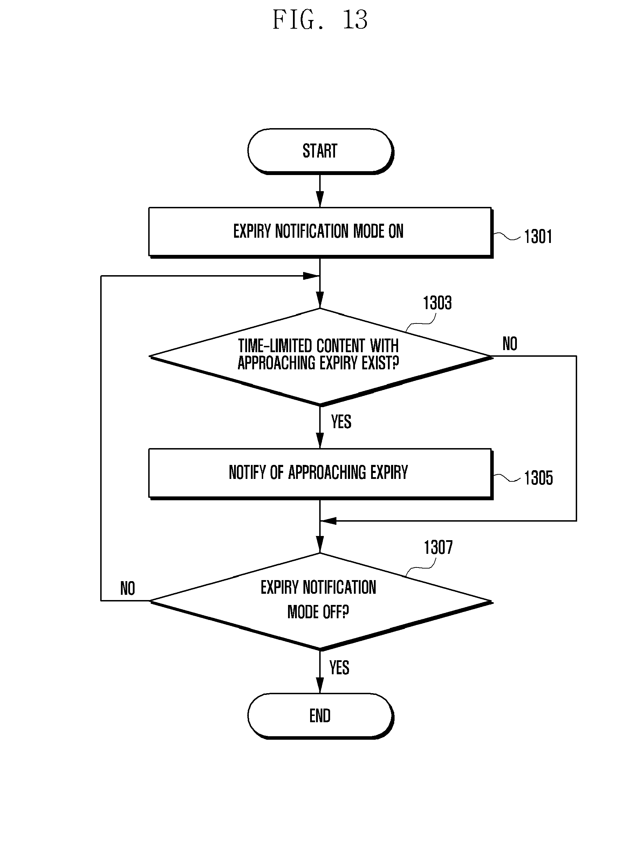

FIG. 13 is a flowchart illustrating an expiry alert procedure of the time-limited content management method according to an embodiment of the present invention.

Referring to FIG. 13, the control unit 110 is capable of activating(turning ON) an expiry alert mode in response to a user request at step 1301. The expiry alert mode is the operation mode for alerting expiries of the time-limited contents in advance. In order to accomplish this, the user can configure the second reference value for notifying the approaching expiries of the time-limited contents. As described above, the second reference value can be configured differentlyfor the respective time-limited contents or as a common value applied to all of the time-limited contents. Also, multiple reference values can be configured for one time-limited content. Since the description regarding the second reference value has been made above, detailed description thereon is omitted herein.

In step 1303, the control unit 110 is capable of checking whether there is any time-limited content for which expiry is approaching; that is, the control unit 110 determines whether there is any time-limited content for which the expiry period is equal to or less than the second reference value. If there is no time-limited content having an approaching expiry, the procedure jumps to step 1307. Otherwise, if there is a time-limited content having an approaching expiry, the control unit 110, at step 1305, is capable of notifying the user of the time-limited content to be expired. At this time, the control unit 110 is capable of notifying the user of the time-limited content to be expired by outputting one of visual, audio, and tactile alarms. For example, the control unit 110 is capable of displaying an icon alerting a user to the existence of the time-limited content to be expired on the display panel 131, outputting an alarm sound alerting the user of the existence of the time-limited content to be expired through the speaker (SPK) of the audio processing unit 160, or generating a vibration alerting the user of the existence of the time-limited content to be expired.

The control unit 110 is capable of determining whether there is a request for deactivating (turning OFF) the expiry alert mode at step 1307. If there is no request for deactivating the expiry alert mode, the control unit 110 returns the procedure to step 1303 to repeat the above-described steps. Otherwise, if there is a request for deactivating the expiry alert mode, the control unit 110 is capable of terminating the expiry alert mode. As described above, the present invention is capable of improving the user's convenience in managing the time-limited contents by causing the terminal to alert the user to the expiry of the time-limited content at a predetermined instant.

As described above, the time-limited content management method and apparatus of the electronic device according to the present invention is capable of displaying the expiry period information (type and expiry period) of the time-limited content (rental content and subscription content) at a side of the content view screen and content execution screen. The time-limited content management method and apparatus of the present invention presents the expiry period information of the time-limited contents to the user frequently such that the user is capable of managing the time-limited contents efficiently. The time-limited content management method and apparatus of the present invention provides menu items (repurchase, renewal, deletion, etc.) related to the management of the time-limited content for which rental and subscription period has expired such that the user is capable of executing the related function (repurchase, renewal, deletion, etc.). The time-limited content management method and apparatus of the present invention is capable of displaying the contents for which rental periods have expired in the form of dimmed icons to indicate that the corresponding contents are not executable such that the user is capable of discriminating between the expired contents and others. The time-limited content management method and apparatus of the present invention is capable of notifying the user of the expiry of the corresponding content at a predetermined time point in advance, thereby improving user convenience in managing the time-limited contents.

The above described time-limited content management method of the electronic device according to an embodiment of the present invention can be implemented in the form of program commands executable by various computer computing means so as to be recorded in a computer-readable storage media. The computer-readable media may include program commands, data files, data structures, etc. separately or compositely. The program commands recorded in the media may be particularly designed and configured for the present invention, or known and used by those skilled in the computer software field. The computer-readable media may be magnetic media such as a hard disk, a floppy disk and magnetic tape, optical media such as a compact disk read-only memory (CD-ROM) and a digital versatile disk (DVD), magneto-optical media such as floptical disk, and hardware devices such as a ROM, a random-access memory (RAM), a flash memory, etc., particularly implemented to store and execute program commands. Also, the media may be transmission media such as optical or metal lines, waveguides, etc. including carriers delivering signals indicating program commands, data structures, and so on. The program commands may be machine language codes produced by a compiler and high-level language codes that can be executed by computers using an interpreter, etc. In order to perform the operations of the present invention, the hardware devices may be implemented to operate as at least one software module, and vice versa.

Although the time-limited content management method and apparatus of the electronic device according to embodiments of the present invention have been described in detail hereinabove with specific terminology, this is for the purpose of describing particular embodiments only and not intended to limit the invention in any manner. While particular embodiments of the present invention have been illustrated and described, it would be obvious to those skilled in the art that various other changes and modifications can be made without departing from the spirit and scope of the invention.

## Claims

1. A time-limited content management method of an electronic device, comprising:
receiving a request for displaying at least one time-limited content; and
displaying a view screen showing the at least one time-limited content arranged in response to the request,
wherein the at least one time-limited content being shown by the view screen comprises type of content and expiry period of the at least one time-limited content and wherein the expiry period is shown based on at least one first reference value.

2. The time-limited content management method of claim 1, further comprising:
executing a specific time-limited content on the view screen; and
displaying a content execution screen with the type and expiry period of the specific time-limited content displayed proximately to each other.

3. The time-limited content management method of claim 1 or 2, wherein displaying the view screen comprises:
dimming the time-limited content for which rental period has expired;
displaying a text notifying of the expiry of the time limited content for which its rental period has expired, a rental period extension menu, and a deletion menu displayed proximately to the corresponding thumbnail image or to the corresponding list item on the view screen:
displaying a text notifying of the expiry of a subscription period of a subscription content at a side of the corresponding thumbnail image or at a side of the corresponding list item on the view screen; and
displaying a purchase menu at a side of the corresponding thumbnail image or the corresponding list item on the view screen allowing for a repurchase of the subscription content for which the subscription period has expired.

4. The time-limited content management method of any of the previous claims, wherein the view screen comprises one of a list view screen for presenting the at least one time-limited content in the form of a list and a thumbnail view screen for presenting the at least one time-limited content in the form of a thumbnail image, and a view switching menu for switching between the list view screen and the thumbnail view screen and a content type selection menu allowing for selecting any one or more of rental contents, subscription contents, and normal contents having no time limit.

5. The time-limited content management method of any of the previous claims, wherein the view screen displays a plurality of related time-limited contents with a representative content and wherein each of the related time-limited contents has an expiry period having a value within a range including a shortest expiry period to a longest expiry period,
wherein the expiry period of the representative content is set to the shortest expiry period among the expiry periods of the plurality of related time-limited contents.

6. The time-limited content management method of any of the previous claims, further comprising displaying, when the time-limited content is a subscription content and a new issue of the subscription content which has been published in the subscription period, an icon notifying of existence of the new issue and a download menu at a side of the view screen.

7. The time-limited content management method of any of the previous claims, further comprising:
configuring a second reference value for notifying of an approaching expiry of the time-limited content;
determining whether any time-limited content has an expiry period matching the second reference value; and
notifying, when any time-limited content having an expiry period matching the second reference value, of the approaching expiry of the time-limited content.

8. The time-limited content management method of claim 7, wherein the second reference value is configured per one of an individual time-limited content or all of the time-limited contents identically, and each time-limited content has one or more second reference values.

9. A time-limited content management device, comprising:
a control unit which controls display of a view screen having the at least one time-limited content arranged in response to a request for displaying at least one time-limited content; and
a display panel which displays the view screen,
wherein the control unit is arranged such that the view screen comprises type and expiry period of the at least one time-limited content and wherein the expiry period is displayed based on at least one first reference value.

10. The time-limited content management device of claim 9, wherein the control unit controls displaying, when execution of a specific time-limited content is requested, a content execution screen with the type and expiry period of the specific time-limited content positioned proximately with respect to each other.

11. The time-limited content management device of claim 9 or 10, wherein the control unit controls dimming the time-limited content of for which rental period has expired and displaying a text notifying of the expiry of the time limited content for which rental period has expired, a rental period extension menu, and a deletion menu positioned proximately with respect to one of the corresponding thumbnail image and the corresponding list item on the view screen,
wherein the control unit controls displaying a purchase menu allowing for repurchase of the subscription content for which a subscription period has expired positioned proximately to one of the corresponding thumbnail image and the corresponding list item on the view screen.

12. The time-limited content management device of any of the claims 9-11, wherein the view screen comprises a list view screen for presenting the at least one time-limited content in the form of a list and a thumbnail view screen for presenting the at least one time-limited content in the form of one or more thumbnail images, and a view switching menu for switching between the list view screen and the thumbnail view screen and a content type selection menu allowing for selecting any one or more of rental contents, subscription contents, and normal contents having no time limit.

13. The time-limited content management device of any of the claims 9-12, wherein the view screen displays a plurality of related time-limited contents using a representative content and wherein each of the related time-limited contents has an expiry period having a value within a range including a shortest expiry period to a longest expiry period,
wherein the expiry period of the representative content is set to the shortest expiry period among the expiry periods of the plurality of related time-limited contents.

14. The time-limited content management device of any of the claims 9-13, wherein the control unit determines whether any time-limited content having an expiry period matching the second reference value; and notifies, when any time-limited content of which expiry period matches the second reference value, of an expiry of the time-limited content.

15. The time-limited content management device of claim 14, wherein the second reference value is configured per one of an individual time-limited content and for all of the time-limited contents identically, and each time-limited content has one or more second reference values.
